# FASCICULE DE BREVET EUROPEEN

(11) **EP 1 252 524 B1**
(45) Date de publication et mention de la délivrance du brevet: **09.07.2003**
(21) Numéro de dépôt: 01903925.4
(22) Date de dépôt: 11.01.2001
(51) Int. Cl.: G01P 3/44

(54) **DISPOSITIF DE PALIER A ROULEMENT INSTRUMENTE AVEC PRE-INDEXATION ANGULAIRE TEMPORAIRE DU CODEUR PAR RAPPORT AU CAPTEUR**
INSTRUMENTIERTE LAGERVORRICHTUNG MIT TEMPORÄRER WINKELVORINDEXIERUNG DES KODIERERS GEGENÜBER DEM SENSOR
INSTRUMENTED ANTIFRICTION BEARING DEVICE WITH TEMPORARY ANGULAR PRE-INDEXING OF THE ENCODER RELATIVE TO THE SENSOR

(30) Priorité: 27.01.2000 FR 0001053
(43) Date de publication de la demande: 30.10.2002
(73) Titulaire: SKF FRANCE, F-92140 Clamart (FR)
(72) Inventeur: MESSAGE, Olivier, F-37000 Tours (FR); LANDRIEVE, Franck, F-37230 Fondettes (FR); GALLION, Samuel, F-37000 Tours (FR); MAESTRATI, Jean-François, F-37300 Joue-les-Tours (FR)
(74) Mandataire: Casalonga, Axel
(86) Numéro de dépôt international: FR0100089
(87) Numéro de publication internationale: WO01055730

(56) Documents cités:
- EP-A- 0 665 436
- EP-A- 0 949 510
- DE-A- 19 806 206
- US-A- 5 015 001

## Description

La présente invention concerne le domaine des paliers à roulement instrumentés munis d'un ensemble de détection des paramètres de rotation tels que la position angulaire, le sens de rotation, la vitesse, l'accélération.

De tels roulements instrumentés et de tels montages sont bien connus, notamment par les documents FR-A-2 754 903 ou EP-A-0 665 436. Ces roulements instrumentés peuvent être utilisés, par exemple, pour le pilotage de moteurs électriques de type synchrone, cas dans lequel il est souhaitable de connaître la position angulaire relative des pôles du rotor et des pôles du stator, notamment de savoir quand les pôles du rotor sont en face des pôles du stator, position dans laquelle le couple fourni est maximal.

L'ensemble de détection constitué par un bloc capteur et un élément codeur fournit alors au système d'asservissement du moteur toutes les informations utiles, en particulier la vitesse de rotation et la position des pôles du rotor par rapport à ceux du stator.

On peut équiper une partie tournante d'un codeur délivrant des impulsions et une partie non tournante d'un capteur fixe susceptible de détecter ces impulsions et d'en déduire des informations relatives au déplacement et à la position angulaire de la partie tournante par rapport à la partie non tournante. Dans les montages conventionnels, le système capteur-codeur est indépendant des paliers à roulement grâce auquel une partie tourne dans une autre partie concentriquement à cette dernière.

De manière connue en soi, le codeur peut être de type magnétique et se présenter sous la forme d'une bague multipolaire dont le nombre de pôles dépend du nombre de pôles du moteur à piloter. Le codeur peut coopérer avec un capteur de type magnéto sensible, sonde à effet Hall par exemple, délivrant une tension de sortie variant à chaque changement de polarité de la bague du codeur et délivrant ainsi un signal caractéristique de type carré.

Il est également connu d'utiliser un roulement instrumenté muni d'un codeur solidaire de la bague tournante du roulement et d'un capteur solidaire de la bague non-tournante du même roulement. Un connecteur et un câble relient le capteur à une unité électronique qui analyse et exploite en permanence le signal provenant du capteur.

Par rapport à un système conventionnel utilisant un ensemble de détection capteur/codeur indépendant du roulement, l'emploi d'un roulement instrumenté offre des avantages substantiels au niveau de l'utilisateur final, notamment en ce qui concerne la compacité et le nombre réduit de pièces, ce qui facilite le montage.

Si on veut connaître la position des pôles du rotor par rapport à ceux du stator au moyen du roulement instrumenté, on comprendra qu'il faut, lors du montage du rotor dans le stator, que
- le capteur soit orienté angulairement par rapport aux pôles du stator,
- le codeur soit orienté angulairement par rapport au capteur,
- le codeur soit orienté angulairement par rapport aux pôles du rotor.

Ces opérations sont relativement délicates à réaliser dans la mesure où elles doivent être effectuées simultanément durant le montage du rotor dans le stator. On doit en effet avoir recours à des index mécaniques ou optiques pour assurer simultanément, lors du montage du roulement dans le moteur électrique, une orientation angulaire relative adéquate des éléments précités de manière à pouvoir exploiter ultérieurement le signal du roulement instrumenté pour repérer la position angulaire des pôles du rotor par rapport aux pôles du stator.

La présente invention propose un dispositif de palier à roulement instrumenté disposé à la place d'un des deux paliers à roulement, évitant ainsi le montage d'un ensemble capteur-codeur séparé dans le moteur, ledit dispositif permettant en outre à l'utilisateur de s'affranchir de toute opération d'indexation du codeur par rapport au capteur et par rapport aux pôles du rotor lors du montage final dans le moteur.

Le dispositif de palier à roulement instrumenté, selon un aspect de l'invention, est du type pourvu d'une partie non tournante comprenant une bague non tournante et un moyen capteur, d'une partie tournante comprenant une bague tournante et un moyen codeur, et d'au moins une rangée d'éléments roulants disposés entre deux chemins de roulement des bagues non tournante et tournante. Le moyen capteur non tournant et le moyen codeur tournant forment un ensemble de détection des paramètres de rotation. Le dispositif comprend des moyens de maintien temporaire de l'indexation angulaire du moyen codeur par rapport au moyen capteur, dans une position où ledit moyen codeur génère dans le moyen capteur un signal de référence.

Avantageusement, la partie qui se déplace axialement est destinée à être solidarisée à la partie tournante du dispositif.

Dans un mode de réalisation de l'invention, la partie qui se déplace axialement vers la rangée d'éléments roulants est le support du moyen codeur.

Dans un autre mode de réalisation de l'invention, la partie qui se déplace axialement vers la rangée d'éléments roulants est montée sur le support du moyen codeur.

Dans un autre mode de réalisation de l'invention, la partie qui se déplace axialement vers la rangée d'éléments roulants est une pièce montée sur la bague tournante du roulement du côté opposé au moyen codeur.

Les moyens de maintien temporaire seront, de préférence, actifs pendant le transport, la manipulation et le montage du palier à roulement jusqu'à sa fixation à demeure dans son logement et sur l'arbre.

Avantageusement, lesdits moyens de maintien temporaire font partie dudit ensemble de détection. Lesdits moyens de maintien temporaire pourront être solidaires d'un capot de protection du moyen capteur.

Dans un mode de réalisation de l'invention, lesdits moyens de maintien temporaire comprennent un élément de friction, par exemple sous la forme de coussinets en élastomère, par exemple en caoutchouc.

Dans un mode de réalisation de l'invention, le moyen codeur comprend un support. Ledit support comprend une première surface en contact axial avec la bague tournante et une deuxième surface axialement opposée à la première et en contact axial avec la partie non tournante.

Ledit support peut être de forme annulaire, être réalisé en tôle métallique et comprendre une portion radiale ou tronconique pourvue de ladite première surface, une portion cylindrique et une portion radiale pourvue de ladite deuxième surface et s'étendant en direction du moyen capteur.

Dans un mode de réalisation de l'invention, la première surface dudit support présente un coefficient de frottement sur la bague tournante inférieur à celui de la deuxième surface sur la partie non tournante, de façon que ledit support soit solidaire en rotation de la partie non tournante tant que les moyens de maintien temporaire sont actifs. Le contact de la deuxième surface sur la partie non tournante peut être du type métal/métal tandis que le contact de la première surface sur la bague tournante peut être du type caoutchouc/métal ou caoutchouc/caoutchouc.

Avantageusement, lesdits moyens de maintien temporaire comprennent un élément sécable. La rupture pourra être provoquée par l'application d'une force axiale déterminée sur le moyen codeur ou sur son support, par exemple lors du serrage du palier sur un arbre destiné à le supporter.

Dans un mode de réalisation de l'invention, le moyen codeur comprend un support comprenant une portion de liaison avec la partie non tournante. La portion de liaison peut être, avant rupture solidaire du support du moyen codeur et de la partie non tournante, et peut comprendre une zone de faible tenue mécanique prévue pour se rompre en désolidarisant le moyen codeur de la partie non tournante.

La portion de liaison peut être prévue entre une portion radiale d'un capot de protection du moyen capteur et une portion radiale du support du moyen codeur, la portion de liaison étant formée dans un espace annulaire les séparant. Lesdites portions radiales peuvent être disposées dans un même plan, avant rupture. La portion de liaison peut être surmoulée sur l'une et l'autre desdites portions radiales.

Dans un mode de réalisation de l'invention, la zone de faible tenue mécanique comprend une pluralité de plots en matériau synthétique.

Dans un mode de réalisation de l'invention, le support du moyen codeur est monobloc.

Dans un autre mode de réalisation de l'invention, le support du moyen codeur comprend deux parties dont au moins une est en contact direct avec le moyen codeur et au moins une est en contact direct avec les moyens de maintien temporaire. Les deux parties peuvent être concentriques et ajustées mutuellement avec contact de friction. Les deux parties peuvent être réunies temporairement par des plots sécables.

Dans un mode de réalisation de l'invention, le support du moyen codeur comprend au moins une portion axialement déformable.

Dans un mode de réalisation de l'invention, les moyens de maintien sont réalisés en une seule partie.

Dans un autre mode de réalisation de l'invention, les moyens de maintien sont réalisés en deux parties, avantageusement concentriques, réunies temporairement par des plots sécables.

Dans un mode de réalisation de l'invention, les moyens de maintien sont de forme générale annulaire.

Plus généralement, il est prévu des moyens aptes à libérer le maintien temporaire de l'indexation angulaire par le déplacement axial d'au moins une partie d'un élément du dispositif en direction de la rangée d'éléments roulants. Les moyens de libération sont associés aux moyens de maintien et permettent un désaccouplement. Les moyens de libération sont aptes à déplacer axialement deux éléments accouplés pour rompre l'accouplement. Des surfaces radiales de friction sont écartées, des portions sécables sont brisées, etc. Un espace axial permettant ledit déplacement axial fait partie desdits moyens de libération.

La présente invention propose également un procédé de montage d'un palier à roulement instrumenté sur un arbre. Le palier est du type pourvu d'une partie non tournante comprenant une bague non tournante et un moyen capteur, d'une partie tournante comprenant une bague tournante et un moyen codeur, et d'au moins une rangée d'éléments roulants disposés entre deux chemins de roulement des bagues non tournante et tournante, le moyen capteur non tournant et le moyen codeur tournant formant un ensemble de détection des paramètres de rotation. Avant montage, le moyen codeur est maintenu par rapport au moyen capteur, dans une position angulaire où ledit moyen codeur génère dans le moyen capteur un signal de référence. Lors du serrage du palier sur l'arbre, on solidarise angulairement le moyen codeur et la bague tournante du palier, et on supprime le maintien de la position angulaire du moyen codeur par rapport au moyen capteur.

La libération du maintien temporaire de l'indexation angulaire se fait par le déplacement axial d'au moins une partie d'un élément du dispositif en direction de la rangée d'éléments roulants.

Avantageusement, le support du codeur se désolidarise des moyens de maintien par déplacement axial, lors de la solidarisation du moyen codeur avec la bague tournante du palier. Alternativement, le support du codeur se désolidarise des moyens de maintien par la mise en rotation de la bague tournante.

Bien entendu, le moyen capteur peut comprendre un ou plusieurs capteurs, notamment pour accroître la résolution et déterminer un sens de rotation. Le moyen capteur peut être du type magnétique ou optique.

La présente invention sera mieux comprise à l'étude de la description détaillée de quelques modes de réalisation pris à titre d'exemples nullement limitatifs et illustrés par les dessins annexés, sur lesquels :
- la figure 1 est une vue en coupe axiale d'une extrémité d'un moteur électrique équipé d'un palier à roulement selon un premier mode de réalisation de l'invention;
- la figure 2 est une vue de côté en élévation d'une pièce de fixation mise en oeuvre dans le palier à roulement selon le premier mode de réalisation de l'invention;
- la figure 3 est une vue en coupe axiale du palier à roulement de la figure 1 avant pré-indexation;
- la figure 4 est une vue schématique du signal délivré par le capteur en fonction de la position du codeur;
- la figure 5 est une vue en coupe axiale du palier à roulement de la figure 1, avant montage;
- la figure 6 est une vue identique à la figure 5, après montage;
- la figure 7 est une vue en coupe axiale d'un palier à roulement selon un second mode de réalisation de l'invention, avant montage;
- la figure 8 est une vue en coupe axiale du palier à roulement de la figure 7, après montage;
- la figure 9 est une vue en coupe axiale d'un palier à roulement selon un troisième mode de réalisation de l'invention, avant montage;
- la figure 10 est une vue en coupe axiale d'un palier à roulement identique à celui de la figure 9, après montage;
- la figure 11 est une vue en coupe axiale d'un palier à roulement selon un quatrième mode de réalisation de l'invention, emmanché sur un outil d'orientation;
- la figure 12 est une vue identique à la figure 11, après orientation;
- la figure 13 est une vue de côté en élévation du palier à roulement de la figure 12;
- la figure 14 est une vue identique à la figure 11, après montage;
- la figure 15 est une vue en coupe axiale d'un palier à roulement selon un cinquième mode de réalisation, avant pré-indexation;
- la figure 16 est une vue de côté en élévation du palier à roulement de la figure 15;
- la figure 17 est une vue identique à la figure 15, avant montage et après indexation angulaire;
- la figure 18 est une vue identique à la figure 15, après montage;
- la figure 19 est une vue en coupe axiale d'un palier à roulement selon un sixième mode de réalisation de l'invention, avant montage; et
- la figure 20 est une vue identique à la figure 19, après montage.

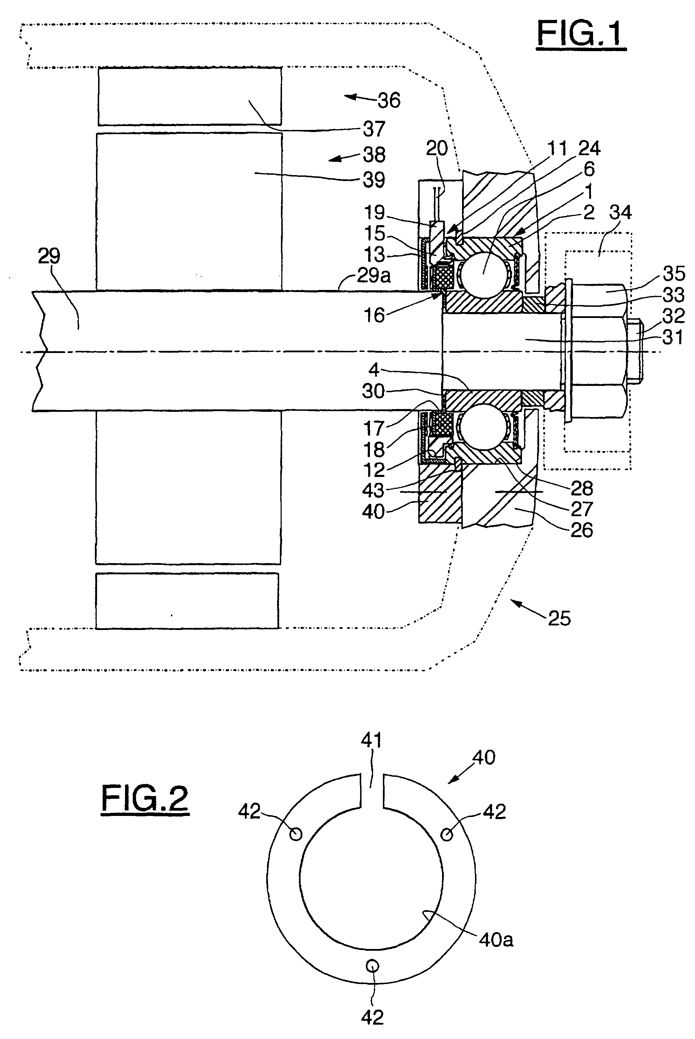

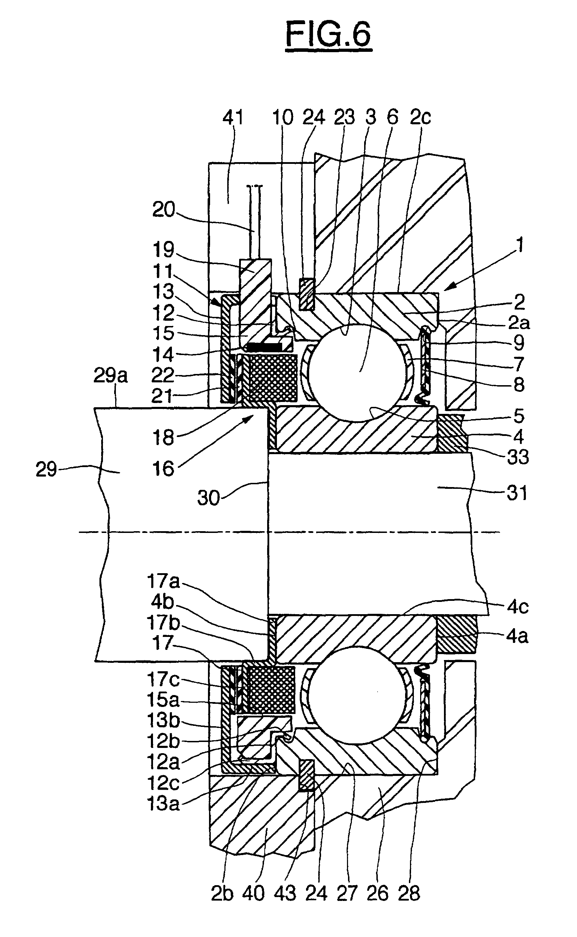

Comme on peut le voir sur les figures 1, 3, 5 et 6, un roulement 1 comprend une bague extérieure 2 pourvue d'un chemin de roulement 3, une bague intérieure 4 pourvue d'un chemin de roulement 5, une rangée d'éléments roulants 6, ici des billes, disposés entre les chemins de roulement 3 et 5, une cage 7 de maintien de l'espacement circonférentiel des éléments roulants 6 et un joint d'étanchéité 8 monté sur la bague extérieure 2 et venant en frottement avec une portée de la bague intérieure 4 tout en étant disposé radialement entre lesdites deux bagues 2 et 4 et axialement entre la rangée d'éléments roulants 6 et l'une des surfaces latérales desdites bagues 2, 4. Le joint d'étanchéité 8 est monté dans une rainure 9 formée dans la bague extérieure 2 à proximité de sa surface latérale radiale 2a. Du côté opposé, la bague extérieure 2 est également pourvue d'une rainure 10 symétrique à la rainure 9 par rapport à un plan passant par le centre des éléments roulants 6. Un bloc capteur référencé 11 dans son ensemble est monté sur la bague extérieure 2 du côté de la rainure 10. Le bloc capteur 11 comprend un support métallique 12, un capot métallique 13, et un élément capteur 14 noyé dans une partie centrale en matériau synthétique 15.

Le support métallique 12, de forme générale annulaire, comprend une paroi radiale 12a en contact avec une surface frontale radiale 2b de la bague extérieure 2 du côté de la rainure 10 et se prolongeant sur son bord interne par un rebord 12b qui est replié dans la rainure 10 et assure l'accrochage du support 12 sur la bague extérieure 2. Le support métallique 12 comprend également une partie cylindrique 12c s'étendant à partir du bord externe de la partie radiale 12a axialement à l'opposé du roulement 1 et se terminant par un rebord légèrement plié à l'oblique à l'intérieur. La partie cylindrique 12c est pourvue d'une échancrure.

Le capot métallique 13 est de forme générale annulaire à section en L avec une partie cylindrique 13a entourant la partie cylindrique 12c du support 12 et apte à être emmanchée avec. La partie cylindrique 13a est de diamètre extérieur sensiblement égal, voire légèrement inférieur à celui de la bague extérieure 2. Le capot métallique 13 comprend également une partie radiale 13b s'étendant à partir de l'extrémité de la partie cylindrique 13a opposée à la bague extérieure 2 et orientée vers l'intérieur, son diamètre intérieur étant du même ordre que celui de la surface cylindrique extérieure de la bague intérieure 4. La partie cylindrique 13a du capot 13 est pourvue d'une échancrure 13c ouverte du côté de la bague extérieure 2 et alignée avec l'échancrure de la partie cylindrique 12c.

La partie centrale 15 est, en dehors de la zone de l'échancrure 13c, limitée radialement par la partie cylindrique 12c du support 12 vers l'extérieur et présente un alésage 15a de diamètre tel qu'il subsiste un espace radial suffisant pour le codeur qui sera décrit plus loin. L'élément capteur 14 qui est solidaire de la partie centrale 15 affleure l'alésage 15a. Une extrémité de la partie centrale 15 en saillie radiale vers l'extérieur forme un terminal 19 de sortie de fil 20. Ledit terminal 19 passe par l'échancrure 13c et par l'échancrure de la partie cylindrique 12c.

Un codeur 16 comprend un support 17 annulaire et une partie active 18. Le support 17 comprend une portion tronconique 17a disposée radialement sensiblement au niveau de la bague intérieure 4 et axialement en contact avec une face latérale 4b de ladite bague intérieure 4 du même côté que le bloc capteur 11, une portion cylindrique 17b s'étendant à partir du bord extérieur de la portion tronconique 17a et axialement en direction opposée à la bague intérieure 4, et une portion radiale 17c s'étendant à partir de l'extrémité de la portion cylindrique 17b opposée à la bague intérieure 4 et radialement vers l'extérieur en direction de la partie centrale 15.

La partie active 18 du codeur 16 est de forme annulaire de section généralement rectangulaire disposée sur le pourtour extérieur de la portion cylindrique 17b et sur la face de la portion axiale 17c orientée du côté des éléments roulants 6. La partie active 18 présente sensiblement le même diamètre extérieur que l'extrémité libre de la portion radiale 17c et s'étend axialement en direction des éléments roulants 6 au-delà de la portion tronconique 17a entre les bagues extérieure 2 et intérieure 4, sensiblement jusqu'au niveau de la rainure 10 de la bague extérieure 2.

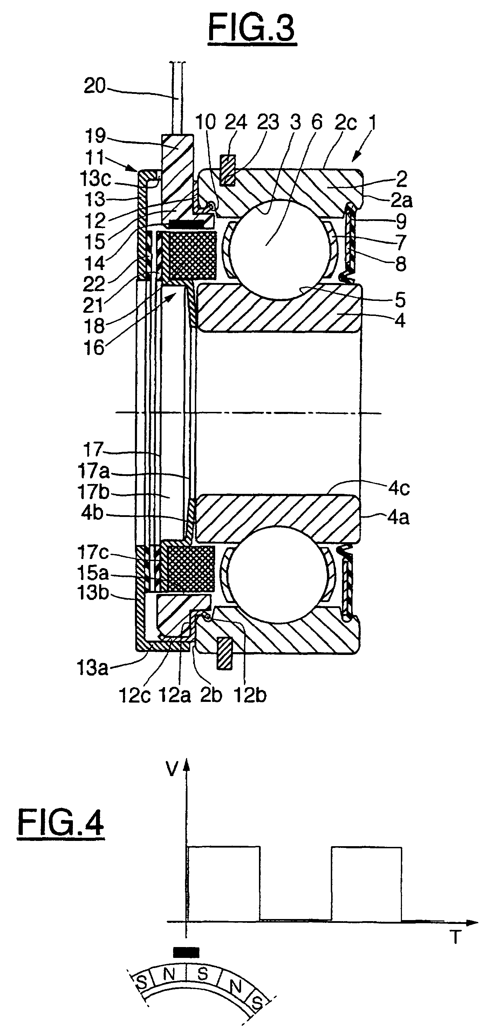

La partie active 18 s'étend jusqu'à proximité de l'alésage 15a de la partie centrale 15 avec lequel elle forme un entrefer radial. Lors de la rotation de la bague intérieure 4 par rapport à la bague extérieure 2, la partie active 18 du codeur 16 défile à rotation devant l'élément capteur 14 qui est capable de fournir en sortie un signal électrique qui peut avoir la forme de la courbe illustrée sur la figure 4. En effet, la partie active 18 du codeur 16 est une bague magnétisée multipolaire, par exemple en plastoferrite. On peut choisir le nombre de pôles magnétiques de la partie active 18 comme un multiple du nombre de pôles du moteur dans lequel le roulement 1 est destiné à être monté. Le codeur 16 et le bloc capteur 11 forment un ensemble de détection de paramètres de rotation.

La face extérieure de la portion cylindrique 17c du support 17 du codeur 16, située du côté opposé à la partie active 18, est couverte par un revêtement 21 formant un coussinet, par exemple en élastomère. La face correspondante de la partie axiale 13b du capot 13 est également couverte en partie par un revêtement 22, par exemple en élastomère, disposé radialement au même niveau que le revêtement 21 et formant un coussinet.

La surface extérieure cylindrique 2c de la bague extérieure 2 est pourvue d'une rainure annulaire 23 dans laquelle est disposé un circlips 24 en saillie radialement par rapport à ladite surface extérieure 2c.

Comme on le voit plus particulièrement sur la figure 1, le roulement 1 est destiné à être monté dans un moteur électrique, par exemple de type synchrone. Le moteur électrique dans son ensemble est référencé 25 et comprend un carter 26 pourvu à une extrémité d'un alésage 27 limité d'un côté par un épaulement 28 prévu pour recevoir le roulement 1 avec la bague extérieure 2 dont la surface extérieure 2c vient en contact avec l'alésage 27 et dont la surface radiale frontale 2a vient en contact avec l'épaulement 28.

Le moteur 25 comprend également un arbre tournant 29 qui se termine à l'extrémité du moteur 25 représenté sur la figure 1 par un épaulement 30 suivi d'une portion cylindrique 31 de plus faible diamètre que celui de la partie principale de l'arbre 29, puis d'une extrémité libre filetée 32. L'alésage 4c de la bague intérieure 4 est reçu sur la portion cylindrique 31 et la partie tronconique 17a du support 17 du codeur 16 est pincée axialement entre la bague intérieure 4 et l'épaulement 30. La surface radiale frontale 4a de la bague intérieure 4 est en contact avec une entretoise 33 qui forme également un passage étroit avec le carter 26. L'entretoise 33 est de forme annulaire et de section rectangulaire. Un organe de transmission de puissance 34 du type poulie, engrenage ou autre, est monté sur la portion cylindrique 31 de l'arbre 29, à l'extérieur du carter 26 et en contact avec l'entretoise 33, et est maintenu en place par un écrou 35. L'écrou 35 provoque donc le serrage axial de la partie tronconique 17a du support 17, de la bague intérieure 4, de l'entretoise 33 et de l'organe 34.

Le moteur 25 comprend un stator 36 pourvu d'une pluralité de pôles 37, solidaire du carter 26, et un rotor 38 pourvu d'une pluralité de pôles 39 et solidaire de l'arbre 29. Le stator 36 et le rotor 38 sont disposés de façon que les pôles 39 du rotor défilent à rotation avec un faible entrefer devant les pôles 37 du stator 36.

Le moteur 25 comprend encore une pièce de fixation 40 également représentée sur la figure 2. La pièce de fixation 40 présente une forme généralement annulaire de section rectangulaire avec une fente 41 et trois trous radiaux 42 destinés à recevoir des vis de fixation sur le carter 26. L'alésage 40a de la pièce de fixation 40 est de diamètre sensiblement égal à celui de la surface extérieure 2c de 1a bague extérieure 2 et de la surface extérieure de la portion cylindrique 13a du capot 13. Un dégagement annulaire 43 est formé sur la pièce de fixation 40 à une extrémité de son alésage 40a. La pièce de fixation 40 permet d'une part l'immobilisation axiale du roulement 1 ainsi que l'immobilisation angulaire et l'indexation du bloc capteur 11. L'immobilisation axiale du roulement 1 est assurée par le contact axial entre la pièce de fixation 40 et le circlips 24 solidaire de la bague extérieure 2, le circlips 24 faisant saillie radialement dans le dégagement 43.

La pièce de fixation 40 est vissée sur le carter 26 du côté intérieur de façon adjacente à l'alésage 27 dudit carter 26 et entourant le bloc capteur 11 et une partie de la bague extérieure 2. Ainsi, le roulement 1 se trouve bloqué d'un côté par le contact entre la bague extérieure 2 et l'épaulement 28 du carter 26 et de l'autre côté par le circlips 24 coopérant avec le dégagement 43 de la pièce de fixation 40. L'indexation angulaire est assurée par le fait que le terminal 19 du bloc capteur 11 se trouve disposé dans la fente 41 de la pièce de fixation 40, elle-même vissée dans le carter 26. On connaît ainsi la position angulaire du capteur 14 par rapport au carter 26, et donc par rapport aux pôles 37 du stator 36. La position angulaire du capteur 14 par rapport au terminal 19 est connue par construction. On a donc une indexation angulaire du capteur 14 par rapport aux pôles 37 du stator 36.

Comme illustré sur la figure 3, le capot 13 n'est pas emmanché à fond sur le support 12. En d'autres termes, il subsiste un léger espace axial entre l'extrémité libre de la partie cylindrique 13a du capot 13 et la surface radiale 2b de la bague extérieure 2. Le codeur 16 est maintenu axialement entre la partie radiale 13b du capot 13 et 1a surface radiale 4b de la bague intérieure 4. La partie tronconique 17a du support 17 est à l'état libre et en contact avec ladite surface radiale 4b. Les revêtements 21 du codeur 16 et 22 du capot 13 ne sont pas en contact et sont séparés par un léger espace axial. Ainsi, le codeur 16 peut tourner tant par rapport à la bague intérieure 4 que par rapport au bloc capteur 11. On en profite alors pour réaliser l'indexation du codeur 16 par rapport au capteur 14 par un positionnement angulaire tel qu'un signal caractéristique soit généré dans le codeur 14, par exemple un front montant tel que celui illustré sur la figure 4, du type que l'on obtient à la limite entre deux pôles de polarité opposée de la partie active 18 du codeur 16. Bien entendu, le codeur pourrait comporter une portion, non représentée, pourvue d'un index magnétique séparé qui, venant en regard du capteur 14 ou d'un capteur additionnel, non représenté, permettrait la génération d'un signal caractéristique permettant également l'indexation du codeur 16 par rapport au bloc capteur 11.

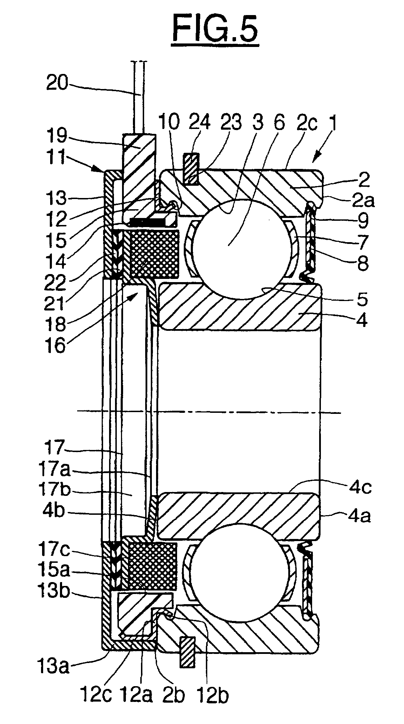

Une fois ce positionnement angulaire relatif obtenu, on vient pousser axialement le capot 13 en direction de la bague extérieure 2 jusqu'à contact entre l'extrémité libre de la partie cylindrique 13a et de la surface radiale 2b de la bague extérieure 2, voir figure 5. Les revêtements ou coussinets en caoutchouc 21 du codeur 16 et 22 du capot 13 sont alors en contact mutuel, ce qui réalise une solidarisation par friction du codeur 16 par rapport au capot 13 et donc au capteur 14. Cette friction est supérieure à celle existant entre la portion tronconique 17a du support 17 et la surface radiale 4b de la bague intérieure 4. Dans cet état, l'indexation du codeur 16 par rapport au capteur 14 peut être conservée durant le transport, la manipulation et le montage du roulement 1.

Le montage du roulement 1 s'effectue en le disposant dans l'alésage 27 du carter 26 jusqu'à contact de la bague extérieure 2 avec l'épaulement 28 du carter 26. Puis, on fixe par vissage la pièce de fixation 40 sur le carter 26 du côté intérieur en utilisant le terminal 19 du bloc capteur 11 pour indexer angulairement le bloc capteur 11 et donc le capteur 14 par rapport aux pôles 37 du stator 36. On solidarise dans cette position, par la pièce de fixation 40, la partie fixe du roulement 1 et le carter 26 du moteur 25.

On procède ensuite à la mise en place de l'arbre 29 muni de son rotor 38 dans l'alésage 4c du roulement 1 par un mouvement axial, sans rotation associée. Durant l'emmanchement, la portion cylindrique 31 de l'arbre 29 vient centrer le support 17 du codeur 16 par rapport au reste du roulement 1. On ajoute ensuite du côté du roulement 1 opposé à l'épaulement 30 de l'arbre 29, une entretoise 33, un organe 34 ou tout autre organe de transmission de puissance, et l'écrou 35. Lors du serrage de l'écrou 35, la bague intérieure 4 se déplace en direction de l'épaulement 30 et pince axialement la partie tronconique 17a du support 17 du codeur 16 en la déformant. La portion tronconique 17a s'aplatit pour devenir une portion purement radiale, ce qui provoque un léger déplacement axial en direction de la rangée de billes 6 des portions cylindrique 17b et radiale 17c du support 17, ce qui a pour effet de désengager l'un de l'autre les revêtements 21 du codeur 16 et 22 du capot 13 et de rendre à nouveau libre tout mouvement de rotation du codeur 16 par rapport au capteur 14.

En d'autres termes, après l'indexation du codeur 16 par rapport au capteur 14, le déplacement axial d'emmanchement du capot 13 vers la bague extérieure provoque l'accouplement en rotation de ces deux éléments. Lors du montage final et du serrage de l'écrou 35 sur l'arbre 29, le pincement de la portion tronconique 17a provoque le désaccouplement du codeur 16 et du capot 13.

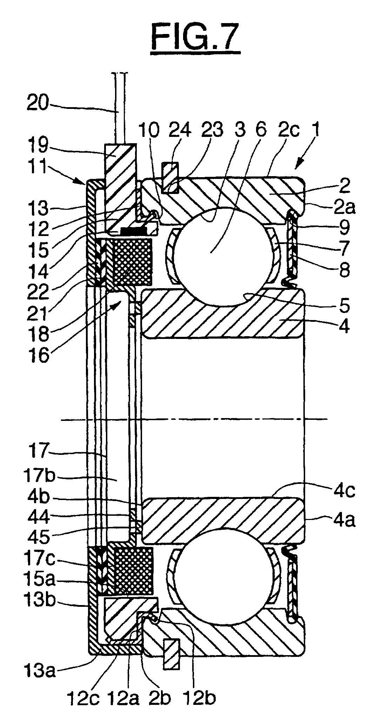

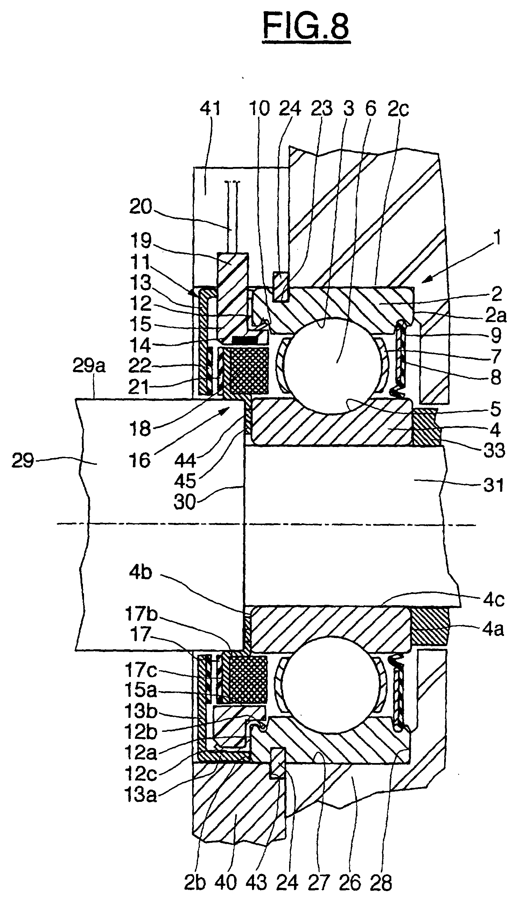

Le mode de réalisation illustré sur les figures 7 et 8 est semblable à ceux des figures précédentes, à ceci près que le support 17 du codeur 16 voit sa portion tronconique remplacée par une portion radiale référencée 44. La portion radiale 44 est pourvue d'une pluralité de languettes ou crevés 45 formés, par exemple, par arrachement dans ladite portion radiale 44. Les languettes 45 sont dirigées axialement du côté de la bague intérieure 4.

Ainsi, après l'indexation du codeur 16 par rapport au capteur 14 et avant le montage sur l'arbre du moteur, c'est-à-dire dans la position illustrée sur la figure 7, les languettes 45 en contact avec la surface radiale frontale 4b de la bague intérieure 4 prennent appui sur ladite surface radiale 4b pour en écarter la portion radiale 44 et par conséquent le support 17, ce qui provoque le rapprochement du revêtement 21 et du revêtement 22 et l'accouplement du codeur 16 et du capot 13.

Le serrage axial du roulement instrumenté contre l'épaulement 30 de l'arbre provoque un déplacement axial du support 17 vers la rangée de billes 6.

Dans l'état final de montage illustré sur la figure 8, la portion radiale 44 et les languettes 45 se trouvent disposées, comme dans le mode de réalisation précédent, entre l'épaulement 30 de l'arbre 29 et la surface 4b de la bague intérieure 4 et sont pincées entre ledit épaulement 30 et ladite surface 4b, d'où l'effacement des languettes 45 et la séparation axiale des revêtements 21 et 22 et le désaccouplement du codeur 16 par rapport au capot 13. Le codeur 16 se trouve donc maintenant solidarisé en rotation avec la bague intérieure 4 et l'arbre 29 tout en étant centré sur ledit arbre 29, la portion cylindrique 17b du support 17 du codeur 16 étant en contact avec une surface extérieure 29a de l'arbre 29 avec éventuellement un léger effet d'emmanchement.

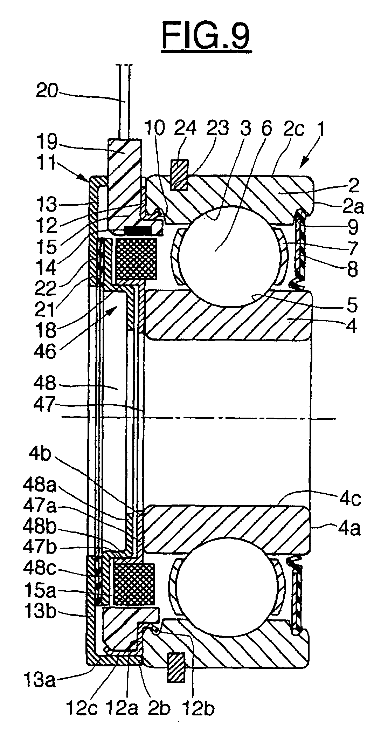

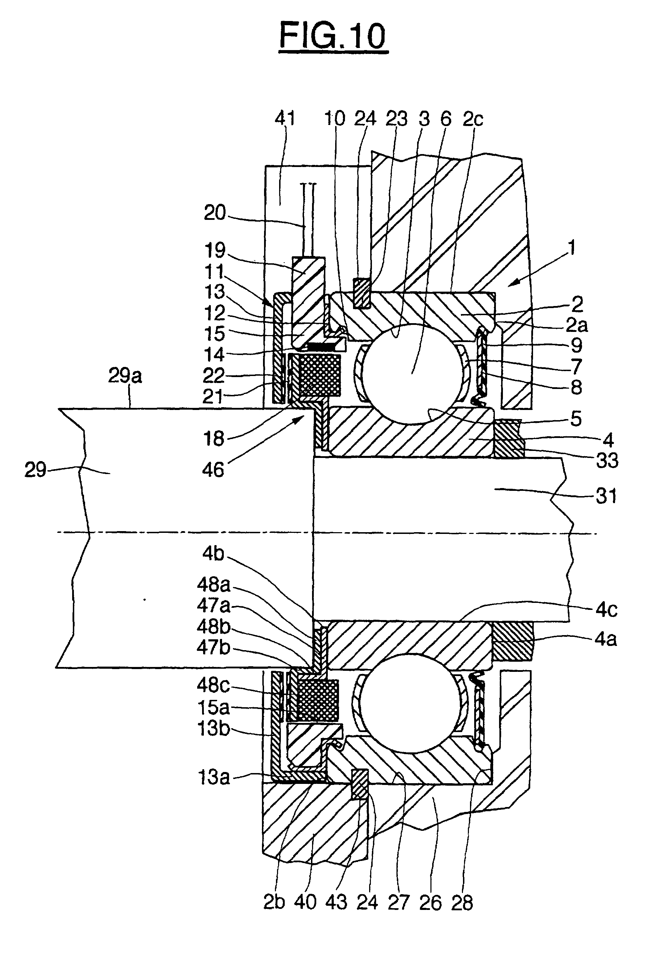

Le mode de réalisation illustré sur les figures 9 et 10 est semblable au premier mode de réalisation, à ceci près que le codeur 16 est pourvu d'un support de type différent référencé 46. Le support 46 est réalisé en deux parties, une première partie 47 et une deuxième partie 48. La première partie 47, de forme annulaire à section en L comprend une portion radiale 47a prévue pour être en contact avec la surface radiale 4b de la bague intérieure 4, et une portion cylindrique 47b s'étendant à partir du bord extérieur de la portion radiale 47a, en étant orientée vers l'extérieur à l'opposé des éléments roulants 6. La partie active 18 est fixée sur la surface extérieure de la portion cylindrique 47b.

La deuxième partie 48 du support 46 est de forme annulaire et comprend une portion radiale 48a disposée parallèlement à la portion radiale 47a de la première partie 47 et de dimension radiale voisine, une portion cylindrique 48b s'étendant axialement vers l'extérieur, à l'opposé des éléments roulants 6, à partir de l'extrémité de grand diamètre de la portion radiale 48a et de diamètre adapté pour être emmanchée sur l'alésage de la portion cylindrique 47b de la première partie 47, du côté opposé à la partie active 18, et une portion radiale 48c s'étendant radialement vers l'extérieur à partir de l'extrémité libre de la portion cylindrique 48b, jusqu'à proximité de la partie centrale 15 du bloc capteur 11. Un revêtement 21 est prévu sur la face extérieure de la portion radiale 48c, à l'opposé de la partie active 18.

Dans la position illustrée sur la figure 9, la deuxième partie 48 a été partiellement emmanchée sur la première partie 47 du support 46.

En d'autres termes, il subsiste un espace axial résiduel entre la portion radiale 47a et la portion radiale 48a et également entre la partie active 18 et la portion radiale 48c. Les revêtements 21 du support 46 et 22 du capot 13 sont en contact mutuel. Le codeur 16 est ainsi accouplé avec le capot 13. Le contact élastomère/élastomère du revêtement 21 sur le revêtement 22 présente une friction supérieure à celle du contact métal/métal de la portion radiale 47a de la première partie 47 du support 46 sur la surface radiale 4b de la bague intérieure 4. Ainsi, une éventuelle rotation de la bague intérieure 4 n'entraînera pas de rotation correspondante du codeur 16.

Lorsque, après montage du roulement 1 dans le carter 26 et vissage de la partie de fixation 40, on amène l'arbre 29 dans l'alésage 4c de la bague intérieure 4 du roulement 1, puis on le déplace axialement en vue de sa fixation, l'épaulement 30 entre en contact avec la portion radiale 48a de la deuxième partie du support 46 et l'entraîne dans son mouvement axial en direction de la rangée de billes 6 jusqu'à contact avec la portion radiale 47a de la première partie 47 du support 46, ce qui provoque l'emmanchement complet de la deuxième partie 48 dans la première partie 47, le contact de la portion radiale 48c avec la partie active 18, la séparation des revêtements 21 et 22 et donc le désaccouplement du codeur 16 par rapport au capot 13 et son accouplement avec l'arbre 29 et la bague intérieure 4. Ceci est illustré sur la figure 10.

Si, en outre, pour tous les modes de réalisation qui précèdent, le rotor 38 est indexé par un moyen approprié par rapport à un index mécanique du codeur 16 ou bien par rapport à un index du carter 26 avant son emmanchement dans l'alésage du roulement instrumenté 1, on réalise ainsi une chaîne d'indexation complète entre stator 36 et rotor 38 par l'intermédiaire du roulement instrumenté 1.

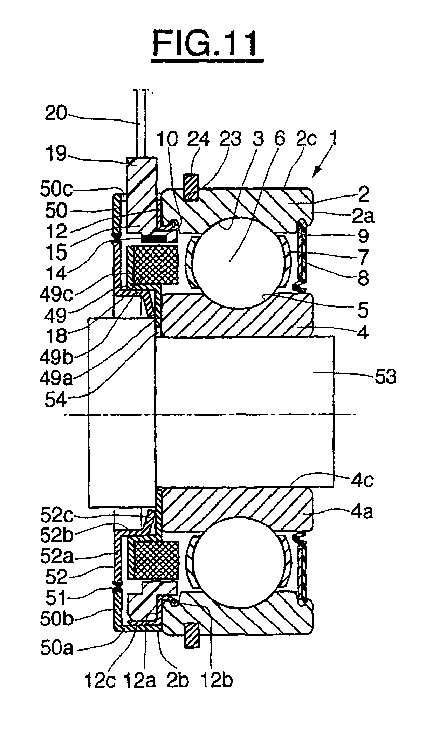

Dans le mode de réalisation illustré sur les figures 11 à 14, le capot du bloc capteur 11 et le support du codeur 16 sont différents de ceux illustrés dans le mode de réalisation des figures 1 à 6. Le support 49 du codeur 16 est de forme annulaire et comprend une portion radiale 49a prévue pour être en contact avec la surface radiale 4b de la bague intérieure 4, de diamètre intérieur sensiblement égal à celui de l'alésage de ladite bague intérieure 4, une portion cylindrique 49b s'étendant axialement vers l'extérieur, à l'opposé des éléments roulants 6, à partir de l'extrémité de grand diamètre de la portion radiale 49a, et une portion radiale 49c s'étendant radialement vers l'extérieur à partir de l'extrémité de la portion cylindrique 49b opposée à la portion radiale 49a. La partie active 18 du codeur 16 est en contact avec la surface extérieure de la partie cylindrique 49b et avec la surface intérieure, du côté des éléments roulants 6, de la portion radiale 49c.

Le capot 50 du bloc capteur 11 comprend une partie cylindrique 50a semblable à la partie correspondante du capot du premier mode de réalisation et pourvue d'une encoche 50c pour laisser passer le terminal 19, et une partie radiale 50b s'étendant radialement vers l'intérieur à partir de l'extrémité de la partie cylindrique du côté opposé à la bague extérieure 2. Ici, on voit que le diamètre intérieur de la partie radiale 50b est du même ordre de grandeur que l'alésage de la partie centrale 15 du bloc capteur 11. Toutefois, à titre de variante, on pourrait prévoir une partie radiale 50b de diamètre plus élevé ou plus faible. L'extrémité de petit diamètre de ladite partie radiale 50b est reliée par une partie de liaison 51 à un élément 52 dit d'accouplement. Le capot 50 est emmanché à fond sur le support 12.

L'élément d'accouplement 52 est de forme annulaire et comprend une partie radiale 52a de diamètre extérieur légèrement inférieur au diamètre intérieur de la partie radiale 50b, la portion de liaison 51 étant disposée entre ladite partie radiale 50b et ladite partie radiale 52a, une partie cylindrique 52b s'étendant axialement en direction des éléments roulants 6 à partir du diamètre intérieur de la partie radiale 52a en étant apte à être emmanchée en partie ou en totalité sur la portion cylindrique 49b du support 49 du codeur 16, et une partie tronconique 52c s'étendant à partir de l'extrémité de la partie cylindrique 52b située du côté des éléments roulants 6, et s'étendant radialement vers l'intérieur et axialement en direction desdits éléments roulants 6. Le diamètre intérieur de la portion tronconique 52c est supérieur à celui de la portion radiale 49a du support 49 du codeur 16. Les pièces seront tolérancées de telle sorte que la partie radiale 49a du support 49 ne soit pas précontrainte axialement entre la surface radiale 4b de la bague intérieure 4 et la partie tronconique 52c de l'élément d'accouplement.

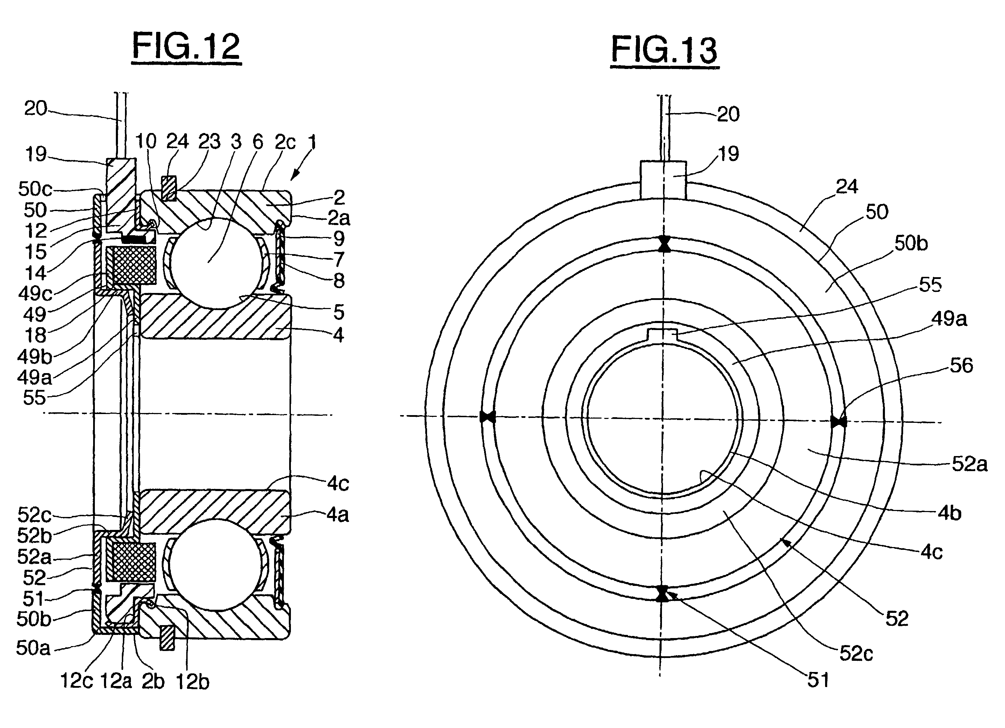

Dans la position illustrée sur la figure 11, un outil de forme générale cylindrique 53 est disposé dans l'alésage 4c de la bague intérieure 4. L'outil 53 est pourvu d'un ergot 54 prévu pour être en concordance de forme avec une encoche 55 prévue sur le bord intérieur de la portion radiale 49a du support 49 du codeur 16. Ainsi, une rotation de l'outil 53 provoque une rotation correspondante du codeur 16 grâce à l'accouplement réalisé par l'ergot 54 et l'encoche 55. L'ajustement entre le support 49 et l'élément d'accouplement 52 est choisi pour autoriser une rotation du codeur 16, indépendamment de l'élément d'accouplement 52 et du capot 50. On peut ainsi réaliser l'indexation du codeur 16 par rapport au capteur 14. Après retrait de l'outil 53, cette indexation est maintenue par la protection qu'offre l'élément d'accouplement 52, le contact de friction entre 1a partie cylindrique 52b et la portion cylindrique 49b du support 49 comme illustré sur la figure 12.

Comme on peut le voir sur la figure 13, la portion de liaison 51 comprend quatre plots sécables 56 qui sont disposés dans l'espace axial entre la partie radiale 50b du capot 50 et la partie radiale 52a de l'élément d'accouplement 52 qui sont coplanaires et concentriques. Les plots 56 seront avantageusement réalisés en matériau synthétique et seront prévus pour résister à une force axiale prédéterminée et se rompre au-delà.

Après la fixation du roulement instrumenté 1 dans le carter 26, qui a déjà été expliquée en référence aux modes de réalisation précédents, on amène l'arbre 29 dont la surface extérieure entre en contact avec l'alésage de la partie cylindrique 52b de l'élément d'accouplement 52, puis dont l'épaulement 30 vient en contact avec la partie tronconique 52c du même élément d'accouplement 52. La poursuite du mouvement axial de l'arbre 29 entraîne la déformation de la partie tronconique 52c qui se redresse progressivement et devient radiale. Le déplacement axial correspondant de l'ensemble de l'élément d'accouplement 52 en direction de la rangée de billes 6 provoque la rupture des plots 56 de la partie de liaison 51, dans la mesure où le capot 13 étant déjà en contact axial contre la surface radiale 2b de la bague extérieure 2, ne peut pas se déplacer axialement.

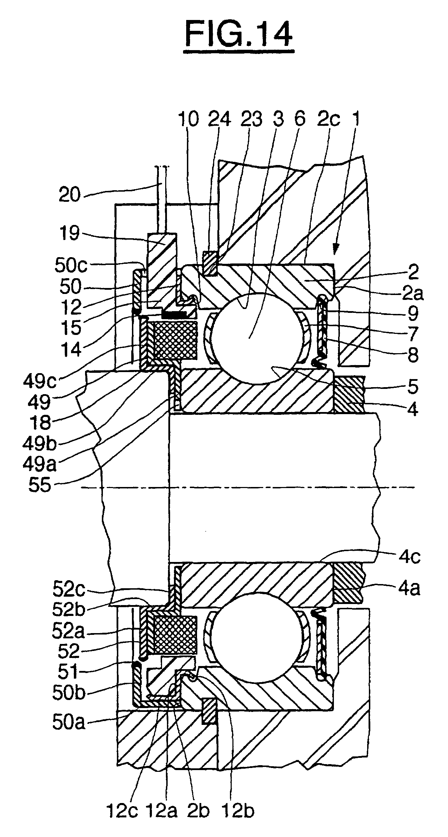

En position finale de montage, tel qu'illustrée sur la figure 14, l'épaulement 30 a provoqué le pincement de la partie tronconique 52c de l'élément d'accouplement 52 et de la portion radiale 49a du support 49 contre la bague intérieure 4 et la solidarisation du codeur 16 avec ledit arbre 29 et ladite bague intérieure 4. Le déplacement axial précité provoque le décalage de la partie radiale 52a de l'élément d'accouplement 52 par rapport à la partie radiale 50b du capot 50, qui ne sont plus désormais coplanaires mais légèrement décalées.

Les contacts de friction existant entre l'élément d'accouplement 52 qui avant montage est solidaire du capot 50, et le support 49 du codeur 16, permettent de maintenir l'indexation angulaire entre le capteur 14 et le codeur 16 jusqu'au montage du roulement instrumenté 1 dans le moteur 25, montage qui provoque l'écrasement de la partie tronconique 52c de l'élément d'accouplement 50. Les plots sécables 56 seront brisés au moment du serrage de l'écrou et, au cas où la rupture n'aurait pas lieu à ce moment-là, la mise en rotation du rotor réalisera cette rupture. A titre de variante, on pourrait tout d'abord procéder à l'indexation du codeur 16 au moyen de l'outil 53 à ergot 54, puis venir ensuite mettre le capot 50 en place.

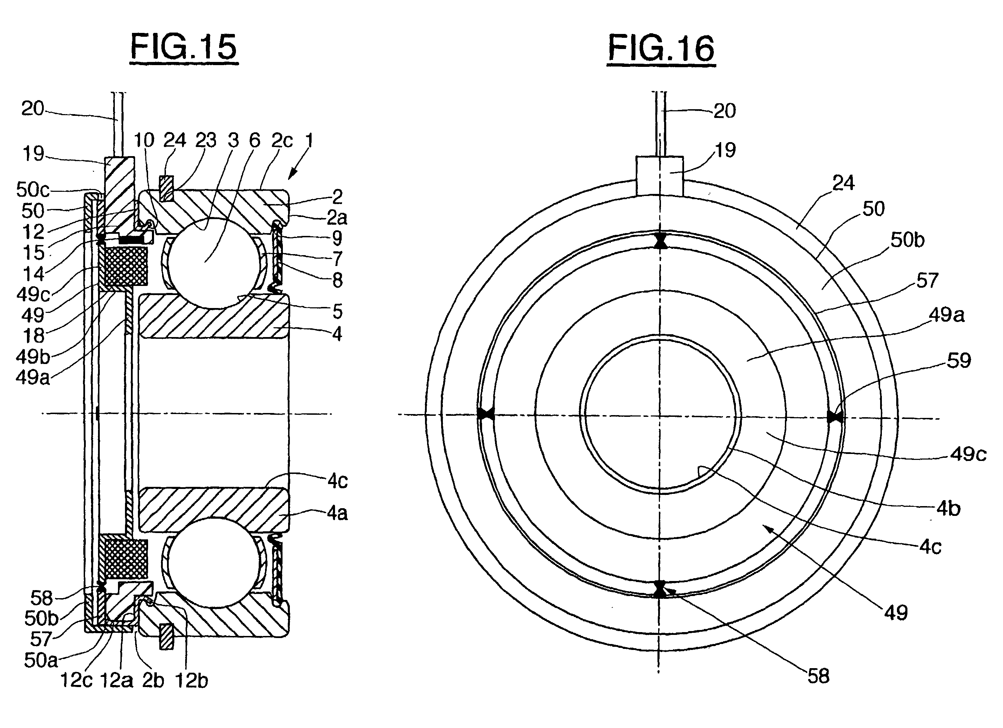

Le mode de réalisation illustré sur les figures 15 à 18 est proche du précédent, à ceci près que le capot 50 est dépourvu de portion de liaison. Un disque 57 est disposé axialement entre la partie radiale 50b du capot 50 et la partie centrale 15 du bloc capteur 11 et radialement à l'intérieur de la partie cylindrique 50a du capot 50. Une portion de liaison 58, analogue à celle du mode de réalisation précédent, est formée entre l'extrémité de grand diamètre de la portion radiale 49c du support 49 du codeur 16 que l'on prolonge très légèrement au-delà de la surface extérieure cylindrique de la partie active 18 et le bord de petit diamètre du disque 57.

Comme on peut le voir sur la figure 15, le codeur 16 qui se trouve donc solidaire axialement et angulairement du disque 57, possède un léger jeu axial par rapport au reste du roulement 1 en raison de l'espace axial défini ci-dessus, dans lequel est disposé le disque 57 et qui est légèrement supérieur à l'épaisseur dudit disque 57. Le codeur 16 est libre de tourner par rapport au bloc capteur 11 et également par rapport à la bague intérieure 4. En effet, la partie radiale 49a du support 49 est séparée axialement de la bague intérieure 4. Dans cette position, le capot 50 n'est pas emmanché à fond sur le support 12 à l'instar de l'emmanchement partiel du capot 13 du mode de réalisation des figures 1 à 6. Dans cette position, on peut orienter de façon adéquate, c'est-à-dire indexer le codeur 16 par rapport au capteur 14.

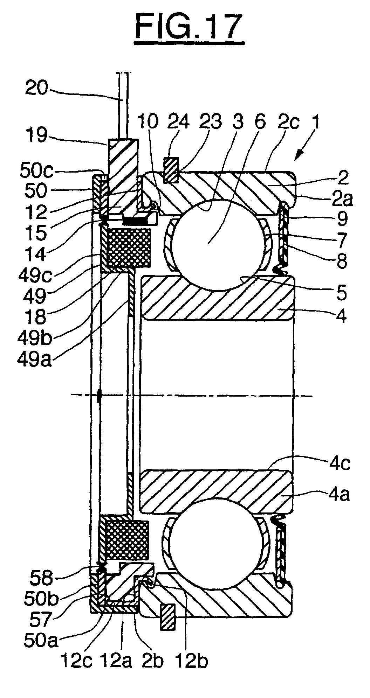

Puis, l'indexation étant effectuée, on vient pousser le capot 50 axialement en direction des éléments roulants 6 jusqu'à pincement du disque 57 entre la partie radiale 50b du capot 50 et la partie centrale 15 du bloc capteur 11. Cet état est illustré à la figure 17. Le disque 57 est ainsi solidaire en translation et en rotation par rapport au bloc capteur 11. Le codeur 16 est donc immobilisé angulairement par rapport au capteur 14 par contact de friction entre le disque 57 et la partie radiale 50b du capot 50 d'une part, et la partie centrale 15 du bloc capteur d'autre part. Bien entendu, on pourrait prévoir des coussinets en caoutchouc entre le disque 57 et la surface interne de la partie radiale 50b du capot pour augmenter le coefficient de frottement entre ces pièces.

Ensuite, on vient fixer le roulement instrumenté 1 dans le logement prévu à cet effet dans le carter 26 comme on l'a expliqué plus haut. Par un mouvement axial, on monte l'arbre 29 pourvu de son rotor, dans le roulement 1. On fait donc coulisser la partie cylindrique 31 de l'arbre 29 dans l'alésage 4c de la bague intérieure 4, l'épaulement 30 se rapprochant axialement de l'élément roulant 6. Progressivement, la portion cylindrique 49b du support 49 vient s'emmancher sur la surface extérieure 29a de l'arbre 29, puis l'épaulement 30 entre en contact avec la portion radiale 49a dudit support 49. La poursuite du mouvement axial de l'arbre 29 entraîne le support 49 et donc le codeur 16 à se rapprocher axialement des éléments roulants 6, ce qui provoque la rupture de la portion de liaison 58 formée comme dans le mode de réalisation précédent par quatre plots sécables 59 réalisés en matériau synthétique.

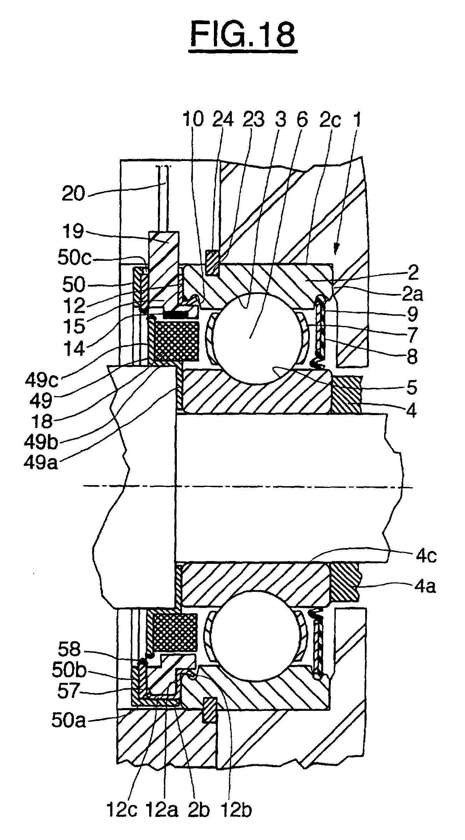

L'état de montage final est illustré sur la figure 18. On voit que le disque 57 est resté fixe par rapport au reste du bloc capteur 11 et que le codeur 16 s'est décalé, entraînant un désalignement de la portion radiale 49c du support 49 et du disque 57 qui était auparavant coplanaire. La portion radiale 49a du support 49 du codeur 16 est pincée entre l'épaulement 30 et la surface radiale 4b de la bague intérieure 4, d'où l'immobilisation angulaire du codeur 16 par rapport audit arbre 29 et à ladite bague intérieure 4. Le codeur 16 peut alors tourner librement par rapport au bloc capteur 11. Le décalage axial entre la portion radiale 49c du support 49 et le disque 57 élimine tout risque de frottement parasite des plots les uns contre les autres après rupture lors de la rotation.

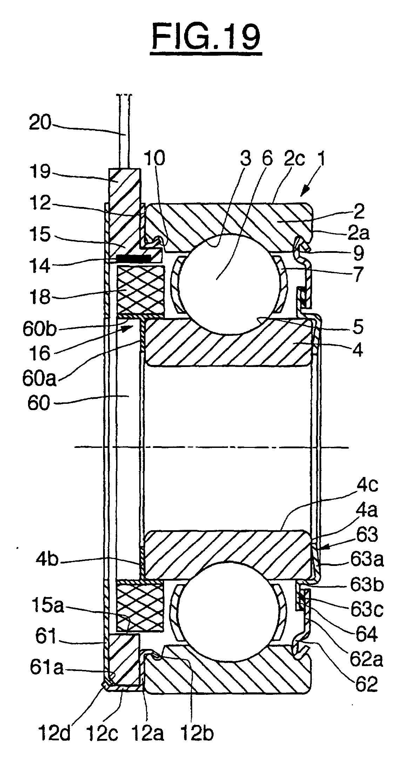

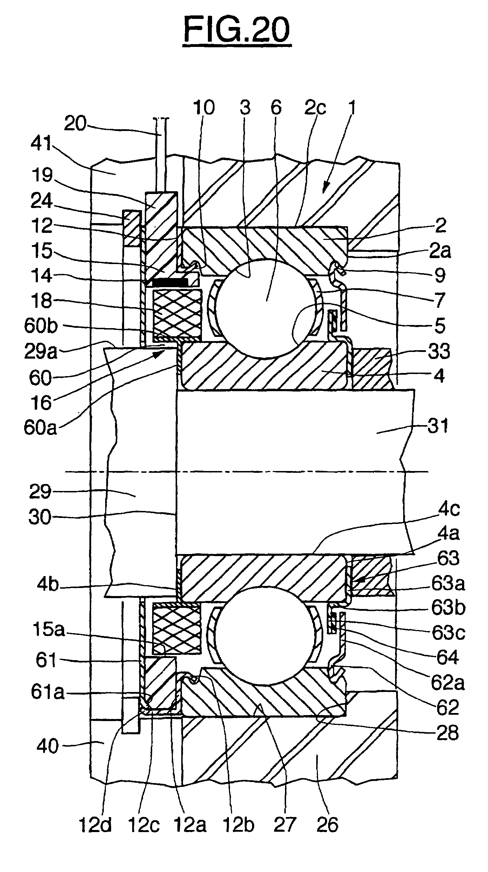

Dans le mode de réalisation illustré par les figures 19 et 20, le codeur 16 comprend un support annulaire 60 à section en T avec une portion centrale 60a formant le pied du T en contact avec la face latérale 4b de la bague intérieure 4, et une portion cylindrique 60b formant la barre du T, reliée au bord externe de la portion radiale 60a, supportant la partie active 18 sur sa surface extérieure, et emmanchée sur une portée externe de la bague intérieure 4.

Le bloc capteur 11 comprend, outre le support 12, l'élément capteur 14 et la partie centrale 15, une paroi radiale 61 annulaire, de diamètre intérieur sensiblement égal au diamètre de la partie cylindrique 60b du support 60 et de diamètre extérieur sensiblement égal à l'alésage de la partie cylindrique 12c du support 12. La paroi radiale 61 est en contact avec la partie centrale 15 du côté opposé à la bague extérieure 2. La retenue de la paroi radiale 61 est assurée par le rebord replié 12d situé à l'extrémité libre de la partie cylindrique 12c. Ici, le bord extérieur 61a de la paroi radiale 61 est replié à l'oblique vers la bague extérieure 2 en concordance de forme avec le rebord 12d.

Dans la rainure 9 de la bague extérieure 2, est fixé un flasque 62 métallique pourvu d'une portion radiale 62a s'étendant vers l'intérieur et sensiblement coplanaire avec la surface radiale 4a de la bague intérieure 4. Une pièce de friction 63 de forme annulaire est montée sur la bague intérieure 4 et comprend une portion tronconique élastique 63a dont le bord interne libre est en contact avec la surface radiale 4a (figure 19), une portion cylindrique 63b formée à partir du bord externe de la portion tronconique 63a et s'étendant vers les éléments roulants 6, emmanchée sur une portée extérieure de la bague intérieure 4, et une partie radiale 63c s'étendant vers l'extérieur. La portion cylindrique 63b est disposée radialement entre le flasque 62 et la bague intérieure 4. La portion radiale 63c est disposée axialement entre les éléments roulants 6 et la portion radiale 62a du flasque 62. Avant montage, le bord externe de la portion tronconique 63a est décalé axialement par rapport à la surface radiale 4a de la bague extérieure 4.

Outre les portions 63a, 63b et 63c métalliques et formées de façon monobloc, la pièce de friction 63 comprend un revêtement de friction 64, par exemple en élastomère, solidaire de la portion radiale 63c du côté du flasque 62 et, avant montage, en contact avec la portion radiale 62a du flasque 62, d'où la solidarisation angulaire temporaire des deux bagues 2 et 4 du roulement 1.

Après montage, voir figure 20, l'entretoise 33 écrase la portion tronconique 63a contre la surface radiale 4a de la bague intérieure 4 et lui confère une forme radiale, ce qui provoque un déplacement axial de la pièce de friction 63 vers les éléments roulants 6 et la séparation du revêtement 64 d'avec le flasque 62.

Les quelques modes de réalisation décrits ci-dessus ne sont pas limitatifs. On pourrait bien entendu prévoir d'utiliser des blocs capteurs comportant plusieurs capteurs, par exemple pour pouvoir déterminer le sens de rotation. On pourrait remplacer le système de détection magnétique par un système de détection optique. Le roulement instrumenté peut être installé non seulement dans un moteur électrique, mais dans tout dispositif dans lequel on souhaite connaître la position angulaire d'une partie par rapport à une autre.

Grâce à l'invention, on dispose d'un roulement instrumenté dont le codeur peut être pré-indexé par rapport au capteur avant livraison avec l'utilisateur final. Le roulement instrumenté peut ensuite subir en toute sécurité diverses manipulations sans perdre cette indexation. Le montage du roulement instrumenté par l'utilisateur final, par exemple dans un moteur électrique, s'effectue de façon simple, fiable et économique, sans avoir à se préoccuper, durant la manipulation et le montage du roulement instrumenté, de l'indexation angulaire du codeur par rapport au capteur qui est maintenue tant qu'on le souhaite.

## Revendications

1. Dispositif de palier à roulement instrumenté, du type pourvu d'une partie non tournante comprenant une bague non tournante (2) et un moyen capteur (14), d'une partie tournante comprenant une bague tournante (4) et un moyen codeur (16), et d'au moins une rangée d'éléments roulants (6) disposés entre deux chemins de roulement des bagues non tournante et tournante, le moyen capteur non tournant et le moyen codeur tournant formant un ensemble de détection des paramètres de rotation, **caractérisé par le fait qu'**il comprend des moyens de maintien temporaire de l'indexation angulaire du moyen codeur par rapport au moyen capteur, dans une position angulaire où ledit moyen codeur génère dans le moyen capteur un signal de référence, et la libération du maintien temporaire de l'indexation angulaire se faisant par le déplacement axial d'au moins une partie d'un élément du dispositif en direction de la rangée d'éléments roulants.

2. Dispositif selon la revendication 1, **caractérisé par le fait que** la partie qui se déplace axialement est destinée à être solidarisée à la partie tournante du dispositif.

3. Dispositif selon la revendication 1 ou 2, **caractérisé par le fait que** la partie qui se déplace axialement vers la rangée d'éléments roulants (6) est le support du moyen codeur.

4. Dispositif selon la revendication 1 ou 2, **caractérisé par le fait que** la partie qui se déplace axialement vers la rangée d'éléments roulants est montée sur le support du moyen codeur.

5. Dispositif selon la revendication 1 ou 2, **caractérisé par le fait que** la partie qui se déplace axialement vers la rangée d'éléments roulants est une pièce montée sur la bague tournante du roulement du côté opposé au moyen codeur.

6. Dispositif selon l'une quelconque des revendications précédentes, **caractérisé par le fait que** lesdits moyens de maintien temporaire font partie dudit ensemble de détection.

7. Dispositif selon l'une quelconque des revendications précédentes, **caractérisé par le fait que** lesdits moyens de maintien temporaire comprennent au moins un élément de friction (21).

8. Dispositif selon la revendication 7, **caractérisé par le fait que** l'élément de friction comprend un coussinet en élastomère.

9. Dispositif selon l'une quelconque des revendications précédentes, **caractérisé par le fait que** le moyen codeur comprend un support (17) comprenant une première surface en contact axial avec la bague tournante et une deuxième surface axialement opposée à la première et en contact axial avec la partie non tournante.

10. Dispositif selon la revendication 9, **caractérisé par le fait que** ledit support est de forme annulaire et comprend une portion radiale ou tronconique pourvue de ladite première surface, une portion cylindrique et une portion radiale pourvue de ladite deuxième surface.

11. Dispositif selon la revendication 9 ou 10, **caractérisé par le fait que** la première surface dudit support présente un coefficient de frottement sur la bague tournante inférieur à celui de la deuxième surface sur la partie non tournante.

12. Dispositif selon l'une quelconque des revendications précédentes, **caractérisé par le fait que** lesdits moyens de maintien temporaire comprennent au moins un élément sécable.

13. Dispositif selon la revendication 12, **caractérisé par le fait que** le moyen codeur comprend un support comprenant une portion de liaison (51) avec la partie non tournante, la portion de liaison étant, avant rupture de l'élément sécable, solidaire du support du moyen codeur et de la partie non tournante, et comprend une zone de faible tenue mécanique prévue pour se rompre en désolidarisant le moyen codeur de la partie non tournante.

14. Dispositif selon la revendication 13, **caractérisé par le fait que** la zone de faible tenue mécanique comprend une pluralité de plots (56) en matériau synthétique.

15. Dispositif selon l'une quelconque des revendications précédentes, **caractérisé par le fait que** la portion de liaison est prévue entre une portion radiale d'un capot de protection du moyen capteur et une portion radiale du support du moyen codeur, disposées dans un même plan avant rupture, la portion de liaison étant formée dans un espace annulaire les séparant.

16. Dispositif selon l'une quelconque des revendications précédentes, **caractérisé par le fait que** le support du moyen codeur est monobloc.

17. Dispositif selon l'une quelconque des revendications 1 à 15 , **caractérisé par le fait que** le support du moyen codeur comprend deux parties dont au moins une est en contact direct avec le moyen codeur et au moins une est en contact direct avec les moyens de maintien temporaire, les deux parties étant concentriques et ajustées mutuellement avec contact de friction.

18. Dispositif selon l'une quelconque des revendications précédentes, **caractérisé par le fait que** le support du moyen codeur comprend au moins une portion axialement déformable.

19. Procédé de montage d'un palier à roulement instrumenté sur un arbre, le palier étant du type pourvu d'une partie non tournante comprenant une bague non tournante et un moyen capteur, d'une partie tournante comprenant une bague tournante et un moyen codeur, et d'au moins une rangée d'éléments roulants disposés entre deux chemins de roulement des bagues non tournante et tournante, le moyen capteur non tournant et le moyen codeur tournant formant un ensemble de détection des paramètres de rotation, dans lequel avant montage, le moyen codeur est maintenu par rapport au moyen capteur, dans une position angulaire où ledit moyen codeur génère dans le moyen capteur un signal de référence, lors du serrage du palier sur l'arbre, on solidarise angulairement le moyen codeur et la bague tournante du palier et on supprime le maintien de la position angulaire du moyen codeur par rapport au moyen capteur.

20. Procédé selon la revendication 19, dans lequel le moyen codeur se désolidarise des moyens de maintien par déplacement axial lors de la solidarisation du moyen codeur avec la bague tournante du palier.

21. Procédé selon la revendication 19, dans lequel le moyen codeur se désolidarise des moyens de maintien par la mise en rotation de la bague tournante.

## Patentansprüche

1. Mit Sensor versehene Wälzlageranordnung, zu der ein stillstehender Teil, der einen stillstehenden Ring (2) und ein Signalaufnehmermittel (14) aufweist, ein umlaufender Teil, der einen umlaufenden Ring (4) und ein Impulsgebermittel (16) aufweist, und wenigstens eine Reihe von Wälzkörpern (6) gehören, die zwischen zwei Lagerlaufflächen des stillstehenden und des umlaufenden Rings angeordnet sind, wobei das stillstehende Signalaufnehmermittel und das umlaufende Impulsgebermittel eine Einheit zum Erfassen von Rotationsparametern bilden, **dadurch gekennzeichnet, dass** die Vorrichtung temporär wirksame Haltemittel umfasst, um das Impulsgebermittel gegenüber dem Signalaufnehmermittel in Umfangsrichtung in einer Drehstellung zu indexieren, in der das Impulsgebermittel in dem Signalaufnehmermittel ein Referenzsignal erzeugt, und dass die Freigabe der vorübergehenden Sperre durch die Indexierung in Umfangsrichtung mittels einer axialen Verschiebung wenigstens eines Abschnitts eines Elements der Vorrichtung in Richtung der Reihe von Wälzkörpern erfolgt.

2. Vorrichtung nach Anspruch 1, **dadurch gekennzeichnet, dass** der Abschnitt, der in axialer Richtung verschoben wird, dazu bestimmt ist, mit dem umlaufenden Teil der Vorrichtung fest verbunden zu werden.

3. Vorrichtung nach Anspruch 1 oder 2, **dadurch gekennzeichnet, dass** der Abschnitt, der in axialer Richtung gegen die Reihe von Wälzkörpern (6) verschoben wird, der Träger des Impulsgebermittels ist.

4. Vorrichtung nach Anspruch 1 oder 2, **dadurch gekennzeichnet, dass** der Abschnitt, der in axialer Richtung gegen die Reihe von Wälzkörpern verschoben wird, an dem Träger des Impulsgebermittels befestigt ist.

5. Vorrichtung nach Anspruch 1 oder 2, **dadurch gekennzeichnet, dass** der Abschnitt, der in axialer Richtung gegen die Reihe von Wälzkörpern verschoben wird, ein Element ist, das auf der dem Impulsgebermittel abgewandten Seite an dem umlaufenden Ring des Wälzlagers befestigt ist.

6. Vorrichtung nach einem der vorhergehenden Ansprüche, **dadurch gekennzeichnet, dass** die vorübergehenden Haltemittel Bestandteil der Erfassungseinheit sind.

7. Vorrichtung nach einem der vorhergehenden Ansprüche, **dadurch gekennzeichnet, dass** die vorübergehend wirksamen Haltemittel mindestens ein Reibelement (21) umfassen.

8. Vorrichtung nach Anspruch 7, **dadurch gekennzeichnet, dass** das Reibelement eine dünne Beschichtung aus einem Elastomer umfasst.

9. Vorrichtung nach einem der vorhergehenden Ansprüche, **dadurch gekennzeichnet, dass** das Impulsgebermittel einen Träger (17) umfasst, der eine erste Fläche, die mit dem umlaufenden Ring in axialer Berührung steht, und eine zweite Fläche aufweist, die in axialer Richtung entgegengesetzt zu der ersten angeordnet ist und die den stillstehenden Abschnitt in axialer Richtung berührt.

10. Vorrichtung nach Anspruch 9, **dadurch gekennzeichnet, dass** der Träger ringförmig gestaltet ist und einen radialen oder konischen Abschnitt, der mit der ersten Fläche versehen ist, einen zylindrischen Abschnitt und einen radialen Abschnitt umfasst, der mit der zweiten Fläche versehen ist.

11. Vorrichtung nach Anspruch 9 oder 10, **dadurch gekennzeichnet, dass** die erste Fläche des Trägers einen Reibungskoeffizienten gegenüber dem umlaufenden Ring aufweist, der geringer ist, als jener der zweiten Fläche gegenüber dem stillstehenden Abschnitt.

12. Vorrichtung nach einem der vorhergehenden Ansprüche, **dadurch gekennzeichnet, dass** das vorübergehend wirksame Haltemittel mindestens ein abtrennbares Element umfasst.

13. Vorrichtung nach Anspruch 12, **dadurch gekennzeichnet, dass** das Impulsgebermittel einen Träger umfasst, der einen Abschnitt (51) zur Verbindung mit dem stillstehenden Abschnitt aufweist, wobei der Befestigungsabschnitt vor einem Brechen des abtrennbaren Elements mit dem Träger des Impulsgebermittels und dem stillstehenden Abschnitt fest verbunden ist, und einen Bereich geringer mechanischer Festigkeit aufweist, der dazu bestimmt ist zu brechen und dabei das Impulsgebermittel von dem stillstehenden Abschnitt zu lösen.

14. Vorrichtung nach Anspruch 13, **dadurch gekennzeichnet, dass** der Bereich geringer mechanischer Festigkeit mehrere Kuppen (56) aus Kunststoff umfasst.

15. Vorrichtung nach einem der vorhergehenden Ansprüche, **dadurch gekennzeichnet, dass** der Verbindungsabschnitt zwischen einem radialen Abschnitt eines Schutzdeckels des Signalaufnehmermittels und einem radialen Abschnitt des Trägers des Impulsgebermittels vorgesehen ist, wobei die radialen Abschnitte vor dem Bruch in ein und derselben Ebene angeordnet sind, und der Verbindungsabschnitt in einem ringförmigen Raum ausgebildet ist, der diese trennt.

16. Vorrichtung nach einem der vorhergehenden Ansprüche, **dadurch gekennzeichnet, dass** der Träger des Impulsgebermittels einstückig hergestellt ist.

17. Vorrichtung nach einem der Ansprüche 1 bis 15, **dadurch gekennzeichnet, dass** der Träger des Impulsgebermittels zwei Abschnitte aufweist, von denen mindestens einer unmittelbar mit dem Impulsgebermittel in Berührung steht und mindestens einer unmittelbar mit den vorübergehenden Haltemitteln in Berührung steht, wobei die beiden Abschnitte konzentrisch angeordnet und für eine reibschlüssige Berührung aneinander angepasst sind.

18. Vorrichtung nach einem der vorhergehenden Ansprüche, **dadurch gekennzeichnet, dass** der Träger des Impulsgebermittels mindestens einen Abschnitt aufweist, der in axialer Richtung verformbar ist.

19. Verfahren zum Zusammenbau eines mit einem Sensor versehenen Wälzlagers auf einer Welle, wobei zu dem Lager ein stillstehender Teil, der einen stillstehenden Ring und ein Signalaufnehmermittel aufweist, ein umlaufender Teil, der einen umlaufenden Ring und ein Impulsgebermittel aufweist, und wenigstens eine Reihe von Wälzkörpern gehören, die zwischen zwei Lagerlaufflächen des stillstehenden und des umlaufenden Rings angeordnet sind, wobei das stillstehende Signalaufnehmermittel und das umlaufende Impulsgebermittel eine Einheit zum Erfassen von Rotationsparametern bilden, bei der das Impulsgebermittel vor einem Einbau gegenüber dem Signalaufnehmermittel in einer Drehposition festgehalten wird, in der das Impulsgebermittel in dem Signalaufnehmermittel ein Referenzsignal erzeugt, das Impulsgebermittel und der umlaufende Ring des Lagers während des klemmenden Aufsteckens des Lagers auf die Welle in Umfangsrichtung befestigt werden, und die Aufrechterhaltung der Stellung des Impulsgebermittels in Umfangsrichtung gegenüber dem Signalaufnehmermittel aufgehoben wird.

20. Verfahren nach Anspruch 19, bei dem das Impulsgebermittel sich während der Befestigung des Impulsgebermittels an dem umlaufenden Ring des Lagers durch axiale Verschiebung von den Haltemitteln löst.

21. Verfahren nach Anspruch 19, bei dem das Impulsgebermittel sich durch ein Drehen des umlaufenden Rings von den Haltemitteln löst.

## Claims

1. Instrumented antifriction rolling bearing including a non-rotatable part comprising a non-rotatable race (2) and sensor means (14), a rotatable part comprising a rotatable race (4) and encoding means (16), and a row of rolling bodies (6) arranged between two raceways of the non-rotatable ring and the rotatable ring, the non-rotatable sensing means and the rotatable encoding means forming a system for detecting rotation parameters, which rolling bearing is **characterized in that** it includes temporary retaining means for temporarily maintaining the angular indexing of the encoding means relative to the sensing means in an angular position wherein said encoding means generate a reference signal in the sensing means, the temporary angular indexing being released by axial displacement of at least part of a component of the device towards the row of rolling bodies.

2. Bearing according to Claim 1, **characterized in that** the part that moves axially is adapted to be fastened to the rotatable part of the bearing.

3. Bearing according to Claim 1 or Claim 2, **characterized in that** the part that moves axially towards the row of rolling bodies (6) is a support of the encoder means.

4. Bearing according to Claim 1 or Claim 2, **characterized in that** the part that moves axially towards the row of rolling bodies is mounted on a support of the encoder means.

5. Bearing according to Claim 1 or Claim 2, **characterized in that** the part that moves axially towards the row of rolling bodies is a member mounted on the rotatable race of the rolling bearing on the side opposite the encoder means.

6. Bearing according to any preceding claim, **characterized in that** said temporary retaining means are part of said detector system.

7. Bearing according to any preceding claim, **characterized in that** said temporary retaining means comprise at least one friction member (21).

8. Bearing according to Claim 7, **characterized in that** the friction member comprises an elastomer pad.

9. Bearing according to any preceding claim, **characterized in that** the encoder means comprise a support (17) having a first surface in axial contact with the rotatable race and a second surface axially opposite the first surface and in axial contact with the non-rotatable part.

10. Bearing according to Claim 9, **characterized in that** said support is annular and has a radial or frustoconical portion including said first surface, a cylindrical portion and a radial portion including said second surface.

11. Bearing according to Claim 9 or Claim 10, **characterized in that** the coefficient of friction between the first surface of said support and the rotatable race is lower than that between the second surface and the non-rotatable part.

12. Bearing according to any preceding claim, **characterized in that** said temporary retaining means comprise at least one weak member.

13. Bearing according to Claim 12, **characterized in that** the encoder means include a support having a connecting portion (51) connecting it to the non-rotatable part, which connecting portion is fastened to the support of the encoder means and of the non-rotatable part before the weak member is broken, and has a mechanically weak area adapted to break to separate the encoder means from the non-rotatable part.

14. Bearing according to Claim 13, **characterized in that** the mechanically weak area comprises a plurality of synthetic material studs (56).

15. Bearing according to any preceding claim, **characterized in that** the connecting portion is between a radial portion of a protective cap for the sensor means and a radial portion of the support for the encoder means, which are disposed in a common plane before the connection is broken, the connecting portion being formed in an annular space between them.

16. Bearing according to any preceding claim, **characterized in that** the support of the encoder means is in one piece.

17. Bearing according to any of Claims 1 to 15, **characterized in that** the support of the encoder means is in two parts at least one of which is in direct contact with the encoder means and at least one of which is in direct contact with the temporary retaining means, the two parts being concentric and fitting together with friction contact.

18. Bearing according to any preceding claim, **characterized in that** the support of the encoder means has at least one axially deformable portion.

19. Method of installing an instrumented rolling bearing on a shaft, the rolling bearing being of the type having a non-rotatable part comprising a non-rotatable race and sensor means, a rotatable part comprising a rotatable race and encoder means, and a row of rolling bodies disposed between two rolling paths of the non-rotatable and rotatable races, the non-rotatable sensor means and the rotatable encoder means forming a rotation parameter detector system in which, prior to installation, the encoder means are retained relative to the sensor means in an angular position in which said encoder means generate a reference signal in the sensor means during clamping of the rolling bearing on the shaft, the encoder means and the rotatable race of the rolling bearing are fastened together circumferentially, and the retention of the angular position of the encoder means relative to the sensor means is eliminated.

20. Method according to Claim 19, wherein the encoder means are detached from the retaining means by axial movement when fastening the encoder means to the rotatable race of the rolling bearing.

21. Method according to Claim 19, wherein the encoder means are detached from the retaining means by rotation of the rotatable race.
